# FASCICULE DE BREVET EUROPEEN

(11) **EP 3 350 529 B1**
(45) Date de publication et mention de la délivrance du brevet: **10.03.2021**
(21) Numéro de dépôt: 16777725.9
(22) Date de dépôt: 14.09.2016
(51) Int. Cl.: F01M 11/00, F28D 9/00, F28F 21/02, F28F 21/06, B29C 65/14

(54) **DISPOSITIF POUR MOTEUR COMPRENANT UN CARTER D'HUILE ET UN ÉCHANGEUR THERMIQUE**
ÖLWANNE FÜR KRAFTFAHRZEUG MIT INTEGRIERTEM WÄRMETAUSCHER
OIL PAN FOR VEHICLE WITH INTEGRATED HEAT EXCHANGER

(30) Priorité: 17.09.2015 FR 1558767
(43) Date de publication de la demande: 25.07.2018
(73) Titulaire: NOVARES France, 92140 Clamart (FR)
(72) Inventeur: ROSSIGNOL, Vincent, 69003 Lyon (FR); WAYMEL, Gilles, 62410 Hulluch (FR); DEMANGEOT, Jérôme, 62350 Calonne Sur La Lys (FR)
(74) Mandataire: Delorme, Nicolas
(86) Numéro de dépôt international: PCT/FR2016/052315
(87) Numéro de publication internationale: WO 2017/046515

(56) Documents cités:
- EP-A1- 2 253 811
- EP-A2- 1 550 835
- DE-A1-102011 001 818
- DE-U1-202009 003 521
- DE-U1-202011 002 197
- FR-A3- 2 977 631
- US-A1- 2013 340 706
- US-B1- 6 513 240
- PHILIPP S: "POLYAMID - DER KUNSTSTOFF UNTER DER MOTORHAUBE ARBEITSPFERD UND ALLESKOENNER", PLASTVERARBEITER, HUETHIG GMBH, HEIDELBERG, DE, vol. 56, no. 2, 1 février 2005 (2005-02-01), page 32,34, XP001206042, ISSN: 0032-1338

## Description

L'invention concerne un dispositif pour moteur qui comprend un carter d'huile et un échangeur thermique.

Dans le secteur automobile, il est connu d'utiliser un échangeur thermique eau-huile pour réguler la température de l'huile moteur.

Ainsi, l'échangeur thermique eau-huile peut permettre d'accélérer la montée en température de l'huile moteur et peut également permettre de refroidir l'huile moteur.

En effet, au démarrage d'un véhicule à moteur, l'eau présente dans le circuit de refroidissement chauffe très rapidement, alors que l'huile du moteur connait une montée en température plus lente. Or, le moteur ne peut fonctionner pleinement tant que l'huile n'a pas atteint la bonne température.

Pour accélérer le chauffage de l'huile, il est connu d'utiliser un échangeur thermique eau-huile. L'échangeur thermique présente le plus souvent un empilement de circuits d'eau et d'huile en contacts étroits pour permettre une transmission de chaleur de l'eau vers l'huile.

Suite aux évolutions récentes, les carters d'huile peuvent être réalisés en matière plastique, tandis que les échangeurs thermiques sont réalisés en aluminium. L'aluminium présente l'avantage d'être caloporteur et ainsi de faciliter les échanges thermiques entre l'eau et l'huile Les documents US 2013/340706 A1 et FR2977631 divulguent des carters d'huile en matière plastique comprenant un échangeur thermique selon la préambule de la revendication 1.

Du document DE 10 2011 001818 A1 on connaît un échangeur thermique à plaques soudées en matière plastique, dont la matière plastique ayant une conductibilité thermique élevée par l'intégration des fibres de carbone. Cet document ne propose pas d'application pour moteur, ni d'assemblage par soudure.

Cependant, l'assemblage de l'échangeur thermique en aluminium sur le carter d'huile en matière plastique implique l'utilisation de joints d'étanchéité et nécessite des fixations par boulonnage, ce qui augmente : le nombre d'opérations de fabrication, les assemblages et donc le coût.

En conséquence, la présente invention a pour objectif de fournir un dispositif pour moteur qui puisse être assemblé avec un nombre réduit d'opérations de fabrication.

Selon une définition générale, l'invention concerne un dispositif pour moteur qui comprend un carter d'huile en matière plastique présentant une forme creuse contenant de l'huile de lubrification délimitée par une paroi de fond, plusieurs parois latérales et des rebords supérieurs. Le carter d'huile présente au moins une surface d'échangeur qui comprend des moyens de circulation d'huile et des moyens de circulation d'un liquide de refroidissement, et un échangeur thermique dans lequel circulent de l'huile et un liquide de refroidissement, comprenant une série de plaques en matière plastique soudées deux-à-deux et soudées sur la surface d'échangeur.

Ainsi, l'invention propose un dispositif pour moteur qui comprend un carter d'huile et un échangeur thermique en matière plastique. L'assemblage de l'échangeur thermique sur le carter d'huile est réalisé par soudage et permet de s'affranchir d'un joint d'étanchéité. L'invention propose donc un dispositif pour moteur qui peut être assemblé avec un nombre réduit d'opérations de fabrication.

De plus, la présence d'une surface d'échangeur sur le carter d'huile permet de maximiser l'étanchéité de la liaison entre le carter d'huile et l'échangeur thermique.

La surface d'échangeur peut être venue de moulage avec le carter d'huile.

Cette disposition technique permet de réduire le nombre d'opérations de fabrication du dispositif.

Selon un autre mode de réalisation, la surface d'échangeur peut être positionnée sur l'une des parois latérales du carter d'huile.

Selon un mode de réalisation, la surface d'échangeur peut être positionnée sur l'un des rebords supérieurs du carter d'huile.

Les plaques de l'échangeur thermique peuvent être en polyamide comprenant entre 30% et 60% d'un additif appartenant au groupe comprenant le graphite et le carbone.

D'une manière avantageuse, l'addition de graphite ou de carbone dans le polyamide permet d'augmenter la capacité de transfert calorifique de l'échangeur thermique.

Le carter d'huile peut être en polyamide.

Une première zone d'échange de chaque plaque peut présenter une pluralité de saillies configurées pour coopérer avec des empreintes d'une deuxième zone d'échange correspondante d'une plaque contiguë.

La série de plaques de l'échangeur thermique peut comprendre des plaques d'écoulement d'huile présentant des moyens d'écoulement de l'huile sur la première zone d'échange de la plaque d'écoulement d'huile, et des plaques d'écoulement de liquide de refroidissement présentant des moyens d'écoulement du liquide de refroidissement sur la première zone d'échange de la plaque d'écoulement du liquide de refroidissement.

La surface d'échangeur peut être ceinturée par une nervure d'assemblage.

Chaque plaque de l'échangeur thermique peut être ceinturée par une nervure d'assemblage.

Les nervures d'assemblage de la surface d'échange et de chaque plaque de l'échangeur thermique peuvent être configurées pour être soudées deux-à-deux.

L'échangeur thermique peut comprendre une plaque de fermeture soudée à la série de plaques de l'échangeur thermique.

Les plaques de l'échangeur thermique peuvent être soudées par induction électromagnétique.

La série de plaques de l'échangeur thermique peut être soudée à la surface d'échangeur par induction électromagnétique.

Selon une disposition particulière, au moins l'une des plaques peut présenter une épaisseur différente de l'épaisseur des autres plaques de l'échangeur thermique.

Le carter d'huile peut comprendre au moins un réceptacle configuré pour recevoir un filtre à huile.

Au moins une paroi latérale du carter d'huile peut présenter une ouverture à proximité de la paroi de fond, l'ouverture étant configurée pour recevoir un bouchon de vidange.

D'autres caractéristiques et avantages de l'invention se dégageront de la description qui va suivre, en regard des dessins annexés qui représentent deux formes de réalisations de l'invention.
- La figure 1 est une vue éclatée, en perspective, de l'invention selon un premier mode de réalisation ;
- La figure 2 est une vue éclatée, en perspective, de l'invention selon un deuxième mode de réalisation ;
- La figure 3 est une vue éclatée en perspective d'une série de plaques d'un échangeur thermique selon un deuxième mode de réalisation de l'invention ;

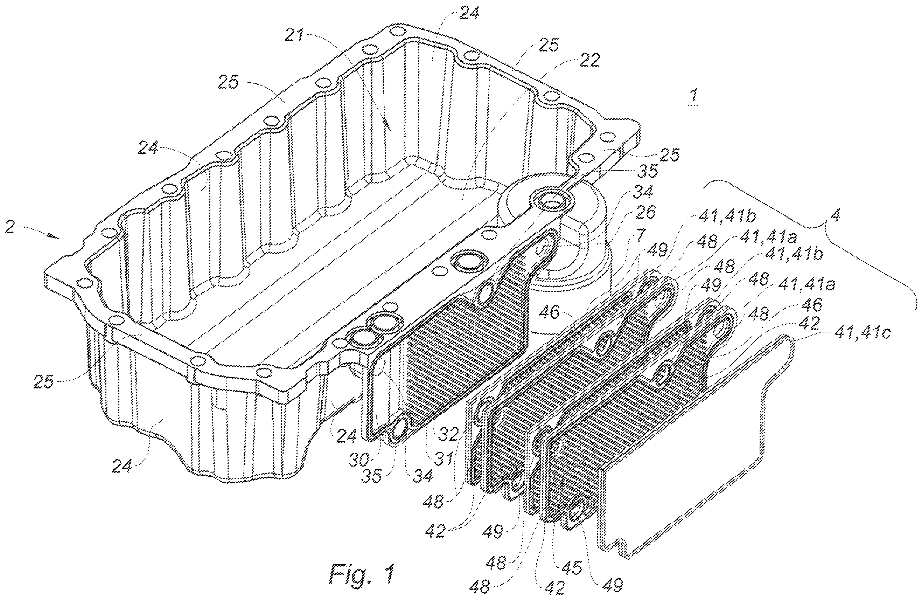

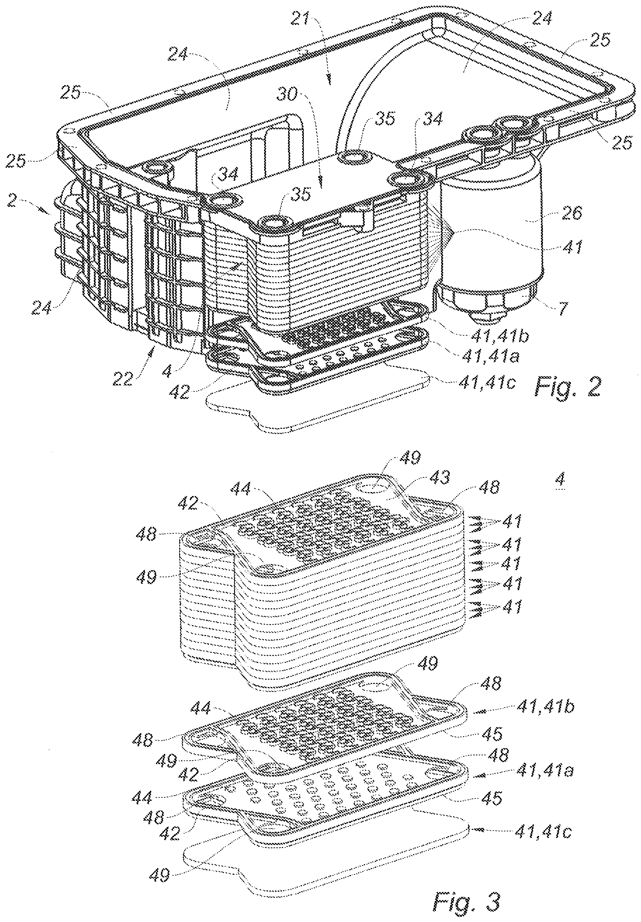

En référence aux figures 1 et 2, l'invention concerne un dispositif 1 pour moteur qui comprend un carter d'huile 2 et un échangeur thermique 4.

Le carter d'huile 2 est réalisé en matière plastique, selon les exemples ici présentés, le carter d'huile 2 peut être réalisé en polyamide moulé.

Le carter d'huile 2 présente une forme creuse 21 contenant de l'huile de lubrification délimitée par une paroi de fond 22, plusieurs parois latérales 24, des rebords supérieurs 25.

D'une manière générale, le carter d'huile 2 peut présenter un réceptacle 26 configuré pour recevoir un filtre à huile 7.

En outre, le carter d'huile 2 présente une surface d'échangeur 30.

Selon le premier mode de réalisation, présenté sur la figure 1, la surface d'échangeur 30 est positionnée sur une paroi latérale 24 du carter d'huile 2.

D'une manière particulièrement avantageuse, la surface d'échangeur 30 est venue de moulage avec le carter d'huile 2.

La surface d'échangeur 30 comprend des moyens de circulation d'huile et des moyens de circulation d'un liquide de refroidissement.

Les moyens de circulation d'huile comprennent des orifices de circulation d'huile 34.

Les moyens de circulation du liquide de refroidissement comprennent des orifices de circulation du liquide de refroidissement 35.

De plus, la surface d'échangeur 30 présente un réseau d'empreintes 31 qui permet de répartir le fluide sur toute la surface d'échangeur 30, de manière à maximiser les échanges thermiques

La surface d'échangeur 30 est ceinturée par une nervure d'assemblage 32 dont la fonction sera détaillée ultérieurement.

On peut se reporter à la figure 2 pour apprécier un deuxième mode de réalisation du dispositif 1. Il est précisé que par simplification, les éléments qui présentent la même fonction, sur les deux modes de réalisation, portent la même référence.

Selon le deuxième mode de réalisation, la surface d'échangeur 30 est positionnée sur un rebord supérieur 25.

L'échangeur thermique 4 est représenté sur les figures 1 à 3. Comme on peut l'observer, l'échangeur thermique 4 comprend une série de plaques 41.

Chaque plaque 41 présente des moyens de circulation d'huile et des moyens de circulation du liquide de refroidissement.

Les moyens de circulation d'huile comprennent des orifices de circulation d'huile 48.

Les moyens de circulation du liquide de refroidissement comprennent des orifices de circulation du liquide de refroidissement 49.

Chaque plaque 41 est ceinturée par une nervure d'assemblage 42 dont la fonction sera détaillée ci-après.

Chaque plaque 41 présente une première zone d'échange 43 qui présente une pluralité de saillies 44. De plus, chaque plaque 41 présente une deuxième zone d'échange 45 qui présente une pluralité d'empreintes 46.

Les saillies 44 de chaque plaque 41 sont configurées pour coopérer avec les empreintes 46 d'une autre plaque 41 adjacente ou avec les empreintes 31 de la surface d'échangeur 30.

D'une manière particulièrement avantageuse, les saillies 44 et les empreintes 46 présentent chacune une géométrie adaptée pour optimiser les échanges calorifiques.

La série de plaques 41 comprend des plaques d'écoulement d'huile 41a et des plaques d'écoulement de liquide de refroidissement 41b.

Les plaques d'écoulement d'huile 41a présentent des moyens d'écoulement de l'huile sur la première zone d'échange 43 de la plaque d'écoulement d'huile 41a.

Les plaques d'écoulement de liquide de refroidissement 41b présentent des moyens d'écoulement de l'huile sur la première zone d'échange 43 de la plaque d'écoulement d'huile 41b.

Comme on peut l'observer notamment sur la figure 3, les saillies 44 des plaques d'écoulement d'huile 41a peuvent présenter une géométrie différente des saillies 44 des plaques d'écoulement du liquide de refroidissement 41b.

Selon une disposition particulière, l'une des plaques 41 peut présenter une épaisseur différente de l'épaisseur des autres plaques 41 de l'échangeur thermique 4.

Comme on peut l'observer, la série de plaques 41 peut, en outre, comprendre une plaque de fermeture 41c. La plaque de fermeture 41c peut présenter des faces sensiblement lisses ou nervurées. La plaque de fermeture 41c est positionnée à l'extrémité libre de la série de plaques 41.

D'une manière particulièrement avantageuse, les plaques 41 sont réalisées en polyamide comprenant entre 30% et 60% d'une charge qui permet d'augmenter la capacité d'échange thermique des plaques 41. La charge peut, par exemple, comprendre du graphite ou du carbone.

A l'usage, les nervures d'assemblage 42 de chaque plaque 41 sont soudées deux-à-deux. De plus, la nervure d'assemblage 42 de la plaque 41 adjacente à la surface d'échangeur 30 est soudée à la nervure d'assemblage 32 de la surface d'échangeur 30.

Selon une disposition particulière, les soudures sont réalisées par induction électromagnétique.

Comme on peut le voir sur les figures, on obtient ainsi un dispositif pour moteur dépourvu de joint d'étanchéité car la soudure de l'échangeur thermique en polyamide chargé sur le carter d'huile en polyamide, permet de garantir l'étanchéité du dispositif. De plus, l'utilisation d'un carter d'huile et d'un échangeur thermique en polyamide permet de raccourcir le procédé de fabrication du dispositif pour moteur.

Bien entendu, l'invention ne se limite pas aux seules formes de réalisation représentées ci-dessus, mais elle embrasse au contraire toutes les formes de réalisation selon le contenu des revendications ajoutées.

## Revendications

1. Dispositif (1) pour moteur **caractérisé en ce qu'**il comprend un carter d'huile (2) en matière plastique présentant une forme creuse (21) contenant de l'huile de lubrification délimitée par une paroi de fond (22), plusieurs parois latérales (24) et des rebords supérieurs (25), le carter d'huile (2) présentant au moins une surface d'échangeur (30) qui comprend des moyens de circulation d'huile et des moyens de circulation d'un liquide de refroidissement, et un échangeur thermique (4) dans lequel circulent de l'huile et un liquide de refroidissement, comprenant une série de plaques (41) **caractérisé en ce que** la série de plaques est en matière plastique soudées deux-à-deux et soudées sur la surface d'échangeur (30).

2. Dispositif (1) selon la revendication 1 **caractérisé en ce que** la surface d'échangeur (30) est venue de moulage avec le carter d'huile (2).

3. Dispositif (1) selon l'une des revendications 1 ou 2, **caractérisé en ce que** la surface d'échangeur (30) est positionnée sur l'une des parois latérales (24) du carter d'huile (2).

4. Dispositif (1) selon l'une des revendications 1 ou 2, **caractérisé en ce que** la surface d'échangeur (30) est positionnée sur l'un des rebords supérieurs (25) du carter d'huile (2).

5. Dispositif (1) selon l'une des revendications 1 à 4, **caractérisé en ce que** les plaques (41) de l'échangeur thermique (4) sont en polyamide comprenant entre 30% et 60% d'un additif appartenant au groupe comprenant le graphite et le carbone.

6. Dispositif (1) selon l'une des revendications 1 à 5, **caractérisé en ce que** le carter d'huile (2) est en polyamide.

7. Dispositif (1) selon l'une des revendications 1 à 6, **caractérisé en ce qu'**une première zone d'échange (43) de chaque plaque présente une pluralité de saillies (44) configurées pour coopérer avec des empreintes (46) d'une deuxième zone d'échange (45) correspondante d'une plaque (41) contiguë.

8. Dispositif (1) selon la revendication 7, **caractérisé en ce que** la série de plaques (41) de l'échangeur thermique (4) comprend des plaques d'écoulement d'huile (41a) présentant des moyens d'écoulement de l'huile sur la première zone d'échange (43) de la plaque d'écoulement d'huile (41a), et des plaques d'écoulement de liquide de refroidissement (41b) présentant des moyens d'écoulement du liquide de refroidissement sur la première zone d'échange (43) de la plaque d'écoulement du liquide de refroidissement (41b).

9. Dispositif (1) selon l'une des revendications 1 à 8, **caractérisé en ce que** la surface d'échangeur (30) est ceinturée par une nervure d'assemblage (31).

10. Dispositif (1) selon l'une des revendications 1 à 9, **caractérisé en ce que** chaque plaque (41) de l'échangeur thermique est ceinturée par une nervure d'assemblage (42).

11. Dispositif (1) selon les revendications 9 et 10, **caractérisé en ce que** les nervures d'assemblage (32-42) de la surface d'échange (30) et de chaque plaque (41) de l'échangeur thermique (4) sont configurées pour être soudées deux-à-deux.

12. Dispositif (1) selon l'une des revendications 1 à 11, **caractérisé en ce que** l'échangeur thermique (4) comprend une plaque de fermeture (41c) soudée à la série de plaques (41) de l'échangeur thermique (4).

13. Dispositif (1) selon l'une des revendications 1 à 12, **caractérisé en ce que** les plaques (41) de l'échangeur thermique (4) sont soudées par induction électromagnétique.

14. Dispositif (1) selon l'une des revendications 1 à 13, **caractérisé en ce que** la série de plaques (41) de l'échangeur thermique (4) est soudée à la surface d'échangeur (30) par induction électromagnétique.

15. Dispositif (1) selon l'une des revendications 1 à 14, **caractérisé en ce qu'**au moins l'une des plaques (41) peut présenter une épaisseur différente de l'épaisseur des autres plaques (41) de l'échangeur thermique (4).

16. Dispositif (1) selon l'une des revendications 1 à 15, **caractérisé en ce que** le carter d'huile (2) comprend au moins un réceptacle (26) configuré pour recevoir un filtre à huile (7).

## Patentansprüche

1. Vorrichtung (1) für einen Motor, **dadurch gekennzeichnet, dass** sie eine Ölwanne (2) aus Kunststoffmaterial umfasst, die eine hohle Form (21) aufweist, die Schmieröl enthält, durch eine Bodenwand (22), mehrere Seitenwände (24) und obere Ränder (25) begrenzt, wobei die Ölwanne (2) mindestens eine Tauscherfläche (30) aufweist, die Ölzirkulationsmittel und Zirkulationsmittel einer Kühlflüssigkeit umfasst, und einen Wärmetauscher (4), in dem Öl und eine Kühlflüssigkeit zirkulieren, eine Reihe von Platten (41) umfassend, **dadurch gekennzeichnet, dass** die Reihe von Platten aus Kunststoffmaterial ist, paarweise verschweißt, und an der Tauscherfläche (30) angeschweißt.

2. Vorrichtung (1) nach Anspruch 1, **dadurch gekennzeichnet, dass** die Tauscherfläche (30) ein Gussteil aus einem Stück mit der Ölwanne (2) ist.

3. Vorrichtung (1) nach einem der Ansprüche 1 oder 2, **dadurch gekennzeichnet, dass** die Tauscherfläche (30) an einer der Seitenwände (24) der Ölwanne (2) positioniert ist.

4. Vorrichtung (1) nach einem der Ansprüche 1 oder 2, **dadurch gekennzeichnet, dass** die Tauscherfläche (30) an einem der oberen Ränder (25) der Ölwanne (2) positioniert ist.

5. Vorrichtung (1) nach einem der Ansprüche 1 bis 4, **dadurch gekennzeichnet, dass** die Platten (41) des Wärmetauschers (4) aus Polyamid sind, zwischen 30% und 60% eines Additivs umfassend, das der Gruppe angehört, die Graphit und Kohlenstoff umfasst.

6. Vorrichtung (1) nach einem der Ansprüche 1 bis 5, **dadurch gekennzeichnet, dass** die Ölwanne (2) aus Polyamid ist.

7. Vorrichtung (1) nach einem der Ansprüche 1 bis 6, **dadurch gekennzeichnet, dass** eine erste Tauschzone (43) jeder Platte eine Vielzahl von Vorsprüngen (44) aufweist, die konfiguriert sind, um mit Abdrücken (46) einer entsprechenden zweiten Tauschzone (45) einer angrenzenden Platte (41) zusammenzuwirken.

8. Vorrichtung (1) nach Anspruch 7, **dadurch gekennzeichnet, dass** die Reihe von Platten (41) des Wärmetauschers (4) Ölströmungsplatten (41a) umfasst, die Strömungsmittel des Öls auf der ersten Tauschzone (43) der Ölströmungsplatte (41a) aufweisen, und Kühlmittelströmungsplatten (41b), die Strömungsmittel des Kühlmittels auf der ersten Tauschzone (43) der Strömungsplatte des Kühlmittels (41b) aufweisen.

9. Vorrichtung (1) nach einem der Ansprüche 1 bis 8, **dadurch gekennzeichnet, dass** die Tauscherfläche (30) durch eine Montagerippe (31) umgeben ist.

10. Vorrichtung (1) nach einem der Ansprüche 1 bis 9, **dadurch gekennzeichnet, dass** jede Platte (41) des Wärmetauschers durch eine Montagerippe (42) umgeben ist.

11. Vorrichtung (1) nach den Ansprüchen 9 und 10, **dadurch gekennzeichnet, dass** die Montagerippen (32-42) der Tauscherfläche (30) und jeder Platte (41) des Wärmetauschers (4) konfiguriert sind, um paarweise verschweißt zu werden.

12. Vorrichtung (1) nach einem der Ansprüche 1 bis 11, **dadurch gekennzeichnet, dass** der Wärmetauscher (4) eine Verschlussplatte (41c) umfasst, die an die Reihe von Platten (41) des Wärmetauschers (4) geschweißt ist.

13. Vorrichtung (1) nach einem der Ansprüche 1 bis 12, **dadurch gekennzeichnet, dass** die Platten (41) des Wärmetauschers (4) durch elektromagnetische Induktion verschweißt sind.

14. Vorrichtung (1) nach einem der Ansprüche 1 bis 13, **dadurch gekennzeichnet, dass** die Reihe von Platten (41) des Wärmetauschers (4) an der Tauscherfläche (30) durch elektromagnetische Induktion verschweißt sind.

15. Vorrichtung (1) nach einem der Ansprüche 1 bis 14, **dadurch gekennzeichnet, dass** mindestens eine der Platten (41) eine Dicke aufweisen kann, die sich von der Dicke der anderen Platten (41) des Wärmetauschers (4) unterscheidet.

16. Vorrichtung (1) nach einem der Ansprüche 1 bis 15, **dadurch gekennzeichnet, dass** die Ölwanne (2) mindestens einen Behälter (26) umfasst, der zum Aufnehmen eines Ölfilters (7) konfiguriert ist.

## Claims

1. An engine device (1) **characterized in that** it comprises an oil pan (2) made of plastic material having a hollow shape (21) containing lubricating oil delimited by a bottom wall (22), several side walls (24) and upper flanges (25), the oil pan (2) having at least one exchanger surface (30) that comprises oil circulation means and cooling liquid circulation means, and a heat exchanger (4) in which oil and a cooling liquid circulate, comprising a series of plates (41) **characterized in that** the series of plates, which are welded in pairs and welded onto the exchanger surface (30) is made of a plastic material.

2. The device (1) according to claim 1 **characterized in that** the exchanger surface (30) is integrally molded with the oil pan (2).

3. The device (1) according to any of claims 1 or 2, **characterized in that** the exchanger surface (30) is positioned on one of the lateral walls (24) of the oil pan (2).

4. The device (1) according to any of claims 1 or 2, **characterized in that** the exchanger surface (30) is positioned on one of the upper flanges (25) of the oil pan (2).

5. The device (1) according to any of claims 1 to 4, **characterized in that** the plates (41) of the heat exchanger (4) are made of polyamide comprising between 30% and 60% of an additive belonging to the group comprising graphite and carbon.

6. The device (1) according to any of claims 1 to 5, **characterized in that** the oil pan (2) is made of polyamide.

7. The device (1) according to any of claims 1 to 6, **characterized in that** a first exchange area (43) of each plate has a plurality of protrusions (44) configured to cooperate with the cavities (46) of a corresponding second exchange area (45) of a contiguous plate (41).

8. The device (1) according to claim 7, **characterized in that** the series of plates (41) of the heat exchanger (4) comprises oil flow plates (41a) having oil flow means on the first exchange area (43) of the oil flow plate (41a), and cooling liquid flow plates (41b) having cooling liquid flow means on the first exchange area (43) of the cooling liquid flow plate (41b).

9. The device (1) according to any of claims 1 to 8, **characterized in that** the exchanger surface (30) is surrounded by a joining rib (31).

10. The device (1) according to any of claims 1 to 9, **characterized in that** each plate (41) of the heat exchanger is surrounded by a joining rib (42).

11. The device (1) according to claims 9 and 10, **characterized in that** the joining ribs (32-42) of the exchange surface (30) and of each plate (41) of the heat exchanger (4) are configured to be welded in pairs.

12. The device (1) according to any of claims 1 to 11, **characterized in that** the heat exchanger (4) comprises a closure plate (41c) welded to the series of plates (41) of the heat exchanger (4).

13. The device (1) according to any of claims 1 to 12, **characterized in that** the plates (41) of the heat exchanger (4) are welded by electromagnetic induction.

14. The device (1) according to any of claims 1 to 13, **characterized in that** the series of plates (41) of the heat exchanger (4) is welded to the exchanger surface (30) by electromagnetic induction.

15. The device (1) according to any of claims 1 to 14, **characterized in that** at least one of the plates (41) can have a thickness different from the thickness of the other plates (41) of the heat exchanger (4).

16. The device (1) according to any of claims 1 to 15, **characterized in that** the oil pan (2) comprises at least one receptacle (26) configured to receive an oil filter (7).
